# EUROPEAN PATENT APPLICATION

(11) **EP 1 783 470 A2**
(43) Date of publication of application: **09.05.2007**
(21) Application number: 06022402.9
(22) Date of filing: 26.10.2006
(51) Int. Cl.: G01K 1/14, G01K 13/00

(54) **Electronic thermometer with flex circuit location**

(30) Priority: 03.11.2005 US 266548
(71) Applicant: Covidien AG, 8212 Neuhausen am Rheinfall (CH)
(72) Inventor: Sisk, Ricky A., Washington MO 63090 (US); Gierer, Joseph T., Glen Carbon IL 62034 (US); Harr, James, Foristell MO 63348 (US); Kimsey, Scott, St. Peters MO 63376 (US)
(74) Representative: Tomlinson, Edward James

(57) **Abstract**

An electronic thermometer has a probe that is used to receive heat from a subject such as a patient for measuring the temperature of the patient. The probe is particularly constructed for simplified, accurate and repeatable assembly of its various component parts.

## Description

### BACKGROUND OF THE INVENTION

The invention pertains to the field of electronic thermometers and more particularly the field of fast response electronic thermometers employing a sensor probe.

Electronic thermometers are widely used in the healthcare field for measuring a patient's body temperature. Typical electronic thermometers have the form of a probe with an elongated shaft. Electronic temperature sensors such as thermistors or other temperature sensitive elements are contained within the shaft portion. In one version, the probe includes a cup-shaped aluminum tip at its free end. A thermistor is placed in thermal contact with the aluminum tip inside the probe. When a free end portion is placed, for example, in a patient's mouth, the tip is heated up by the patient's body and the thermistor measures the temperature of the tip. Additional electronics connected to the electronic sensor components may be contained within a base unit connected by wire to the shaft portion or may be contained within a handle of the shaft portion, for example. Electronic components receive input from the sensor components to compute the patient's temperature. The temperature is then typically displayed on a visual output device such as a seven segment numerical display device. Additional features of known electronic thermometers include audible temperature level notification such as a beep or tone alert signal. A disposable cover or sheath is typically fitted over the shaft portion and disposed after each use of the thermometer for sanitary reasons.

Electronic thermometers have many advantages over conventional thermometers and have essentially replaced the use of conventional glass thermometers in the healthcare field. One advantage of electronic thermometers over their conventional glass counterparts is the speed at which a temperature reading can be taken. Several procedures are used to promote a rapid measurement of the subject's temperature. One technique employed is to use predictive algorithms as part of thermometer logic to extrapolate the temperature measurements from the thermistor in contact with the tip to arrive at a temperature reading in advance of the tip reaching equilibrium with the body temperature. Another technique that can be employed simultaneously with a predictive algorithm is to heat the probe to near the body temperature so that part of the probe away from the tip does not act as a heat sink, allowing the tip to reach a temperature close to the body temperature more rapidly. Heating can be accomplished by a resistor placed in contact with the probe. Another thermistor may be placed in contact with the probe to measure the amount the resistor is heating the probe, which is used to control the heating. It is also known to use an isolator to reduce heat loss from the tip to other parts of the probe. Co-assigned U.S. Patent No. 6,839,651 discloses the use of such an isolator and is incorporated herein by reference.

To assemble the probe the circuitry (e.g., the thermistors and resistor) is mounted on a flexible substrate that supports and provides electrical connection for the components. The combination of the components and the flexible substrate is commonly called a "flex circuit". The substrate may be initially flat to facilitate ease of mounting the components, but can be bent into position upon assembly into the probe. More specifically, the flexible substrate is bent to place one thermistor in position for contacting the probe tip, and to place the resistor and other thermistor in contact with a separator adjacent to the probe tip. These components can be glued in place with a thermally conductive adhesive in the final assembly. However, before the adhesive is brought into contact with the components and/or before the adhesive sets, the components may undesirably move. The result of motion can be insufficient contact of the components with the tip and/or separator to heat or sense temperature in the final assembly. Preferably, such assembly failures should be minimized or avoided.

### SUMMARY OF THE INVENTION

In one aspect of the present invention, an electronic thermometer generally comprises a probe tip adapted to be heated to the temperature by a subject for use in measuring the temperature of the subject. A deformable circuit element includes a deformable electrical conductor and at least one temperature sensor connected to the deformable electrical conductor for detecting the temperature of the probe tip. A probe shaft includes an end portion that is shaped to receive the deformable circuit element in a deformed position and to align the deformable circuit element in a predetermined position.

In another aspect of the present invention, a probe having the construction set forth in the preceding paragraph.

In yet another aspect of the present invention, a method of making a probe for an electronic thermometer generally comprises bringing together a probe shaft and a deformable circuit element into a selected position relative to one another. The deformable circuit element is bent to bring portions of the deformable circuit element into engagement with locating structure formed in the probe shaft. Motion of the bent deformable circuit element is restrained with the locating structure to retain a selected relative position of the deformable circuit element and probe shaft.

In still another aspect of the present invention, an electronic thermometer generally comprises a probe tip adapted to be heated to a temperature by a subject for use in measuring the temperature of the subject, and a deformable circuit element including a deformable electrical conductor. At least one temperature sensor connected to the deformable electrical conductor detects the temperature of the probe tip, and there is at least one other electrical device on the substrate. A probe shaft supports the probe tip and deformable circuit element. A tubular separator received on an end of the probe shaft has a receiving surface lying generally in a plane and engaging said other electrical device when the separator is received on the end of the probe shaft.

In a further aspect of the present invention, a probe for an electronic thermometer having the construction set forth in the preceding paragraph.

In yet a further aspect of the present invention, a method of making a probe for an electronic thermometer generally comprises positioning an electrical device generally at a flat surface formed in an end of the probe shaft. An adhesive is applied to the electrical device. A separator is moved onto the end of the probe shaft so that a generally flat surface on the separator engages the adhesive applied to the electrical device. The electrical device is positioned between the generally flat surfaces of the probe shaft and the separator.

In a still further aspect of the present invention, an electronic thermometer generally comprises a probe shaft, and a probe tip supported by the probe shaft and adapted to be heated to a temperature by a subject for use in measuring the temperature of the subject. A deformable circuit element supported by the probe shaft includes a deformable electrical conductor and at least one electrical device. A generally tubular separator on the probe shaft has first and second opposite ends. The probe shaft is formed with a shoulder generally at a distal end of the probe shaft, and the first end of the separator engages the shoulder and thereby is located relative to the probe shaft and probe tip.

In another aspect of the present invention, an electronic thermometer generally comprises a probe tip adapted to be heated to the temperature by a subject for use in measuring the temperature of the subject. A deformable circuit element includes a deformable electrical conductor, at least one temperature sensor connected to the deformable electrical conductor for detecting the temperature of the probe tip and at least one other electrical device. A probe shaft has a longitudinal axis and supports the probe tip and deformable circuit element. The probe shaft has a receiving surface engaging said other electrical device. A tubular separator received on an end of the probe shaft has a receiving surface and engages said other electrical device when the separator is received on the end of the probe shaft. The receiving surfaces of the probe shaft and tubular separator define acute angles relative to the longitudinal axis greater than about 5 degrees.

In yet another aspect of the present invention, an electronic thermometer generally comprises a probe tip adapted to be heated to a temperature by a subject for use in measuring the temperature of the subject. A deformable circuit element includes a deformable electrical conductor, at least one temperature sensor on the deformable electrical conductor for detecting the temperature of the probe tip and at least one other electrical device. A probe shaft having a longitudinal axis and supporting the probe tip and deformable circuit element has a receiving surface engaging said other electrical device. A tubular separator received on an end of the probe shaft has a receiving surface and engages said other electrical device when the separator is received on the end of the probe shaft. The tubular separator and probe shaft are constructed for snap on connection.

In still another aspect of the present invention, an electronic thermometer generally comprises a probe shaft and an electronic temperature sensor supported by the shaft. A probe tip supported by the shaft at a distal end thereof includes a receiving surface in thermal contact with the sensor and is adapted to be heated by a subject for detection by the sensor to measure the temperature of the subject. The probe tip receiving surface is shaped to indicate the position of the temperature sensor relative to the tip.

In one other aspect of the present invention, an electronic thermometer generally comprises a probe tip adapted to be heated to the temperature by a subject for use in measuring the temperature of the subject. A circuit element supported by the probe shaft includes an electrical conductor and at least one electrical temperature sensor in thermal contact with the probe tip. A probe shaft supporting the probe tip and circuit element is constructed for biasing the temperature sensor in a direction toward the probe tip.

Other features of the present invention will be in part apparent and in part pointed out hereinafter.

### BRIEF DESCRIPTION OF THE DRAWINGS

FIG. 1 is a perspective of an electronic thermometer;

FIG. 2 is a perspective of a probe of the electronic thermometer;

FIG. 3 is a partially exploded perspective of a probe shaft of the probe with parts broken away to show internal construction;

FIG. 4 is an exploded perspective of a probe shaft element of the probe shaft, flex circuit, separator and probe tip;

FIG. 5 is a perspective of the probe shaft element receiving the flex circuit prior to deformation of the flex circuit;

FIG. 6 is a perspective similar to Fig. 5, but inverted to show connection of the flex circuit to the probe shaft element;

FIG. 7 is an enlarged, fragmentary elevation of a distal end of the probe with parts broken away to show internal construction;

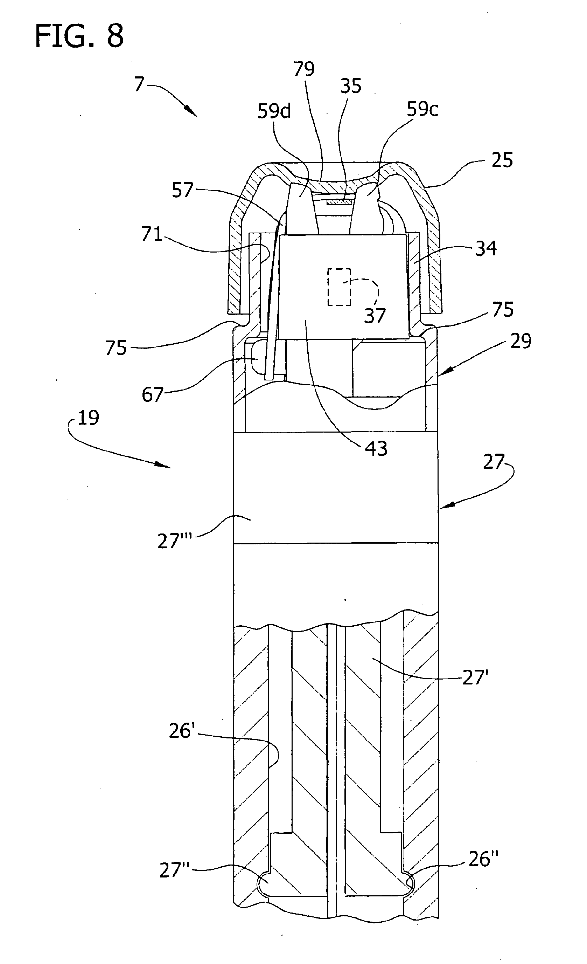

FIG. 8 is an elevation similar to Fig. 7 but showing the distal end of the probe from an opposite side;

FIG. 9 is a perspective of a probe shaft element of a probe shaft, flex circuit, separator and probe tip of a probe of a second embodiment with parts broken away to show internal construction;

FIG. 10 is a perspective of the probe shaft element of Fig. 9;

FIG. 11 is an enlarged, fragmentary section of the distal end of the probe of Fig. 9;

FIG. 12 is an enlarged, fragmentary section of the probe shaft element of Fig. 9;

FIG. 13 is a further enlarged, fragmentary section similar to Fig. 12 but showing positioning of a sensor between the separator and probe shaft element;

FIG. 14 is an enlarged, fragmentary section of a probe of a third embodiment;

FIG. 15 is a section like Fig. 14 but with a tip removed and a separator partially pushed down on a probe shaft element;

FIG. 16 is a section similar to Fig. 14, but showing another version of the probe;

FIG. 17 is a section similar to Fig. 14, but showing yet another version of the probe;

FIG. 18 is a section similar to Fig. 14, but showing still another version of the probe;

FIG. 19 is a perspective of a separator;

FIG. 20 is a section similar to Fig. 14, but showing still yet another version of the probe;

FIG. 20A is a perspective of a separator of the probe of Fig. 20;

FIG. 21 is an enlarged, fragmentary perspective of a distal end of a probe of a fourth embodiment;

FIG. 22 is a perspective of the tip of the fourth embodiment;

FIG. 23 is a back side elevation of the tip with a sensor shown in phantom;

FIG. 24 is a fragmentary section of a probe of a fifth embodiment;

FIG. 25 is a perspective of a separator of the fifth embodiment; and

FIG. 26 is a top end view of the separator and illustrating locations of sensors.

Corresponding reference characters indicate corresponding parts throughout the several views of the drawings.

### DETAILED DESCRIPTION

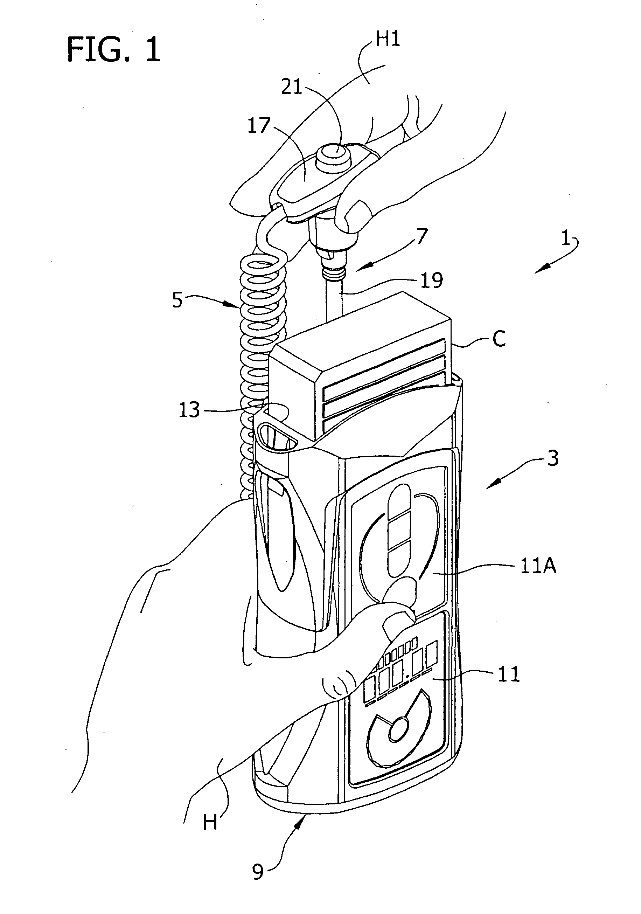

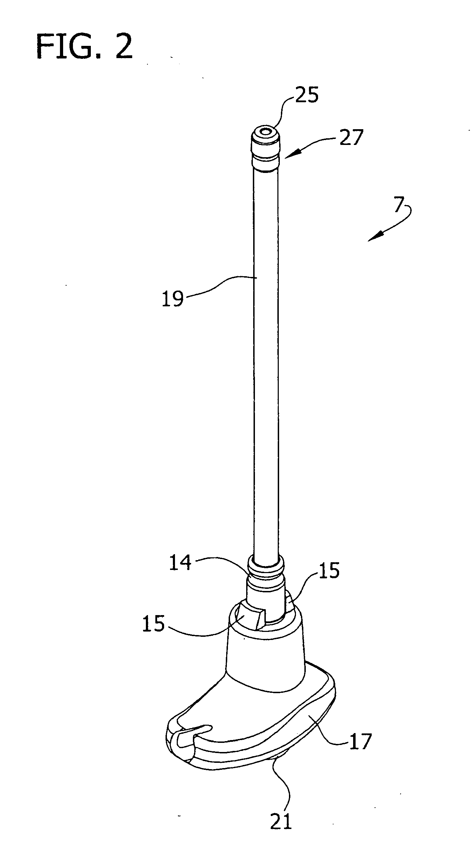

Referring now to the drawings and in particular to Figs. 1 and 2, an electronic thermometer constructed according to the principles of the present invention is indicated generally at 1. The electronic thermometer comprises a temperature calculating unit, indicated generally at 3, that is sized and shaped to be held comfortably in the hand H. The calculating unit 3 (broadly, "a base unit") is connected by a helical cord 5 to a probe 7 (the reference numerals indicating their subjects generally). The probe 7 is constructed for contacting the subject (e.g., a patient, not shown) and sending signals to the calculating unit 3 representative of the temperature. The calculating unit 3 receives the signals from the probe 7 and uses them to calculate the temperature. Suitable circuitry for performing these calculations is contained within a housing 9 of the calculating unit 3. The logic in the circuitry may include a predictive algorithm for rapidly ascertaining the final temperature of the patient. The circuitry makes the calculated temperature appear on a LCD display 11 on the front of the housing 9. Other information desirably can appear on the display 11, as will be appreciated by those of ordinary skill in the art. A panel 11A of buttons for operating the thermometer 1 is located just above the display 11.

The housing 9 includes a compartment (not shown) generally at the rear of the housing that can receive a distal portion of the probe 7 into the housing for holding the probe and isolating the distal portion from the environment when not in use. Figure 1 illustrates the probe 7 being pulled by the other hand H1 from the compartment in preparation for use. The housing 9 also has a receptacle 13 that receives a suitable container such as a carton C of probe covers (not shown). In use, the top of the carton C is removed, exposing open ends of the probe covers. The distal portion of the probe 7 can be inserted into the open end of the carton C and one of the probe covers can be captured (e.g., snapped into) an annular recess 14. Pushers 15 are located at the junction of a handle 17 of the probe 7 with a probe shaft 19. The probe shaft is protected from contamination by the cover when the distal portion of the probe shaft 19 is inserted, for example, into a patient's mouth. A button 21 on the probe handle 17 can be depressed to cause the pushers 15 to move for releasing the probe cover from the probe shaft 19. Subsequent to use, the probe cover can be discarded. Other ways of capturing and releasing probe covers may be used without departing from the scope of the present invention.

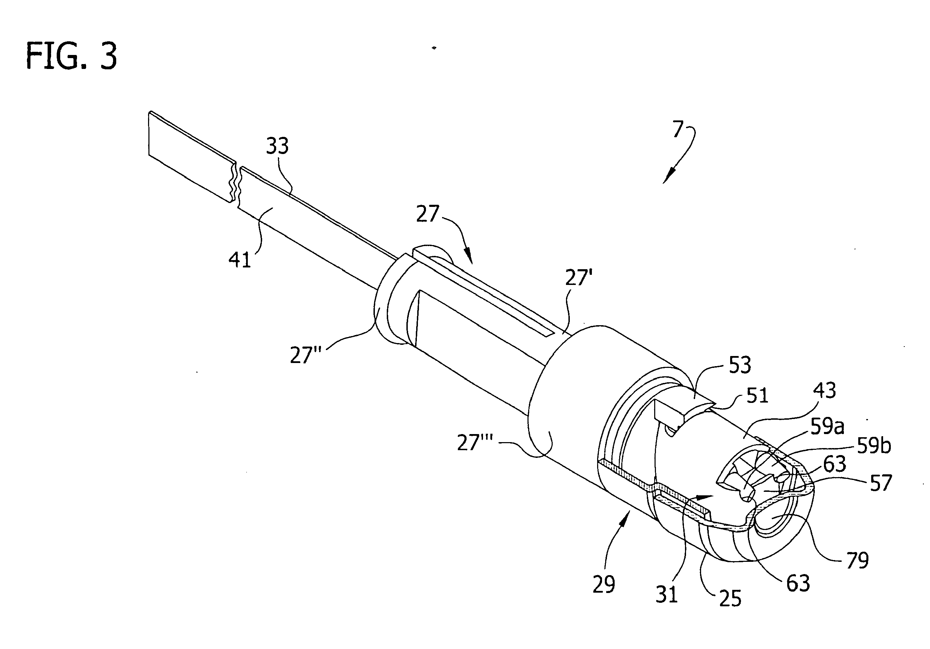

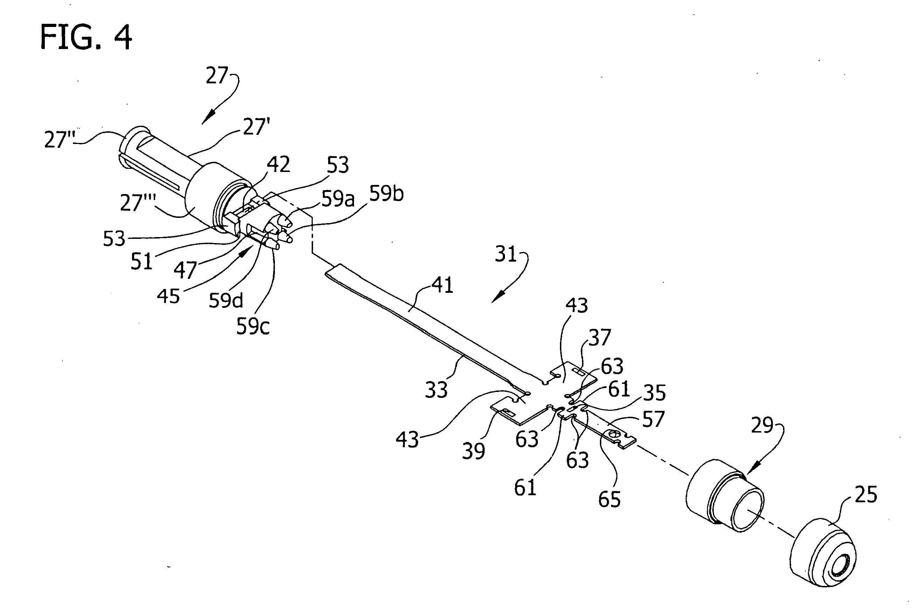

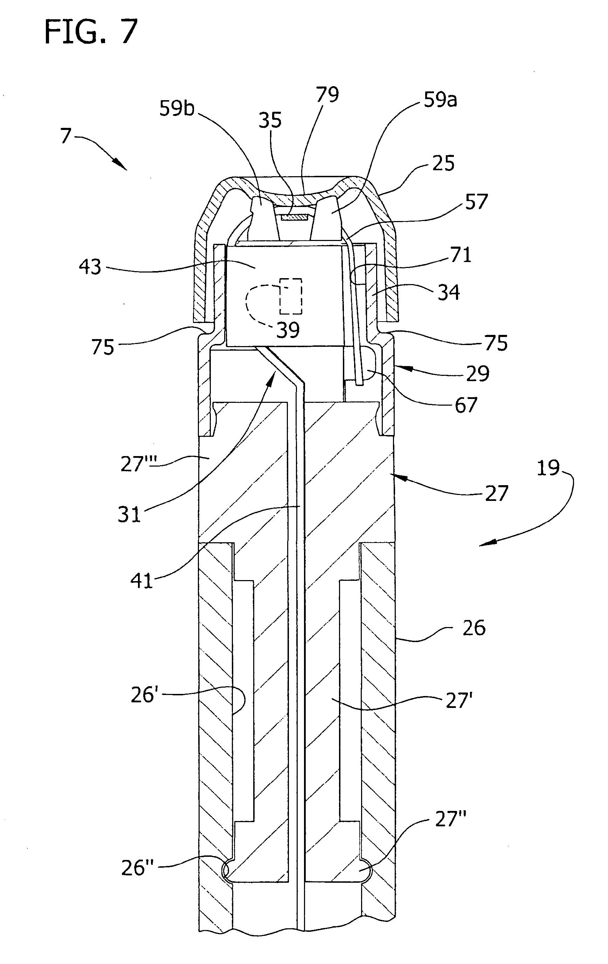

An aluminum tip 25 at the distal end of the probe shaft 19 is heated up by the patient and the temperature of the tip is detected, as will be described more fully hereinafter. The probe cover is preferably made of highly thermally conductive material, at least at its portion covering the tip 25, so that the tip can be rapidly heated by the patient. Referring now to Figs. 3 and 4, the tip 25 and distal end of the probe shaft 19 are partially broken away (or exploded) to reveal components used to measure the temperature of the tip. The probe shaft 19 includes a tube that 26 and a distal probe shaft element indicated generally at 27 that plugs into the distal end of the tube (Fig. 3). The tube 26 has a central passage 26' that receives a split lower cylindrical portion 27' of the probe shaft element 27. The cylindrical portion 27' has an O-ring like protuberance 27" near its bottom end that is snapped into an annular recess 26" in the tube 26 upon assembly to connect the probe shaft element 27 to the tube (see, Fig. 7). It will be appreciated that the protuberance 27'', like the lower cylindrical portion 27' is split in two. A larger diameter, cylindrical portion 27''' of the probe shaft element 27 engages the end of the tube 26 when the probe shaft element is assembled with the tube.

A generally tubular separator, generally indicated at 29, is mounted on the distal end of the probe shaft element 27 and extends generally into the open bottom of the tip 25. The probe shaft 19, tip 25 and separator 29 may be operatively connected together in a suitable fashion such as by adhering with an epoxy (not shown). A flex circuit, generally indicated at 31, includes a deformable substrate 33 (broadly, "an electrical conductor") mounting a tip thermistor 35, a separator thermistor 37 and a heating resistor 39 (see Fig. 4). The tip thermistor 35 is in thermal contact with the tip 25, and the separator thermistor 37 and heating resistor 39 are in thermal contact with the separator 29. It will be appreciated that other electrical components and other arrangements and numbers of components (not shown) may be used without departing from the scope of the present invention.

The tip thermistor 35, separator thermistor 37 and resistor 39 are powered by batteries (not shown) located in the housing 9 of the thermometer 1. It will be understood that other suitable power sources could be employed. The power source need not be located in the calculating unit housing 9 and it is envisioned that the calculating unit 3 could be omitted within the scope of the present invention. The tip thermistor 35 generates a signal that is representative of the temperature of the tip 25. The signal is transmitted by a conductor in the flex circuit substrate 33 to the circuitry in the housing 9 via the cord 5. One way of constructing such a substrate 33 is to have copper that is covered by an electrically insulating, but deformable material. Electrical contact is made where needed by penetrating the insulating cover to access the copper. It will be understood that other kinds of electrical conductors, such as wire, may be used without departing from the scope of the present invention. The separator thermistor 37 generates a signal that is representative of the temperature of the separator 29. The resistor 39 is powered by the batteries and heats the separator 29 so that the aluminum tip 25 can reach the temperature of the patient more rapidly. Monitoring the temperature of the separator 29 with the separator thermistor 37 allows the heating of the resistor 39 to be controlled to best effect. For instance, the separator 29 can be initially rapidly heated, but then heated intermittently as the separator nears or reaches a preselected temperature. The function and operation of these components are known to those of ordinary skill in the art.

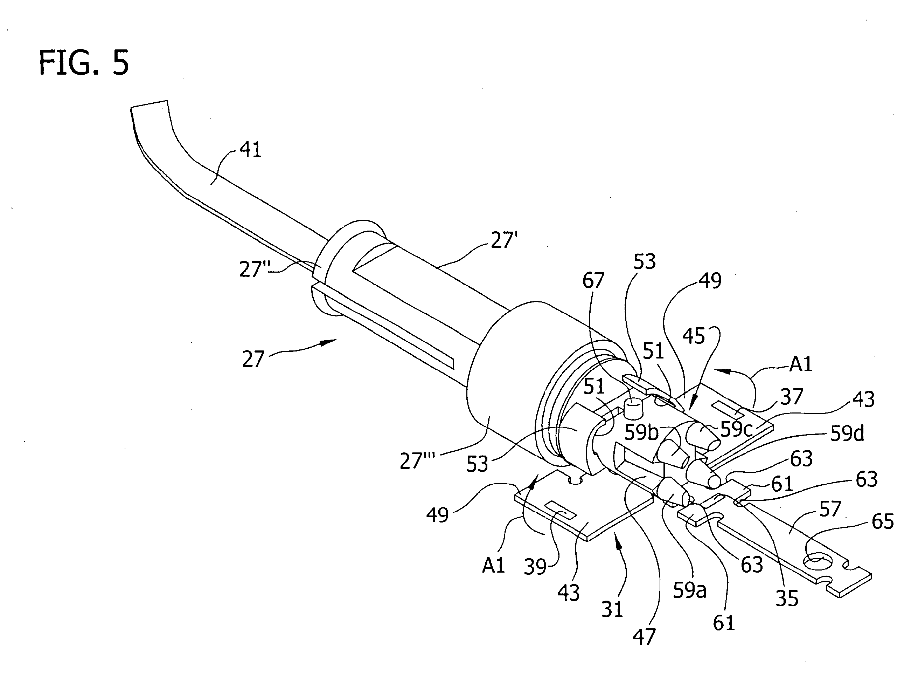

Referring now to Fig. 4, the flex circuit 31 (broadly, "a deformable circuit element") and separator 29 are schematically illustrated prior to assembly. The flex circuit substrate 33 has a flat, cruciform shape. An elongate base portion 41 of the substrate 33 can be inserted into an opening 42 near the top of the cylindrical portion 27''' of the probe shaft element 27 and through the probe shaft element to the position shown in Fig. 5. Arms 43 of the flex circuit 31 are bent in the direction indicated by arrows A1 in Fig. 5 to wrap around the sides of a forming section (indicated generally at 45) of the probe shaft element 27. The forming section 45 includes cylindrical surfaces and recesses 47 on opposite sides of the forming section. As bent around the forming section 45, portions of the arms 43 mounting the separator thermistor 37 and resistor 39 generally overlie respective ones of the recesses. Locating tabs 49 on the bottom edges of the arms 43 can be received in respective slots 51 formed in holding members 53 of the probe shaft element 27 to capture the arms and hold them in their deformed configuration around the forming section 45.

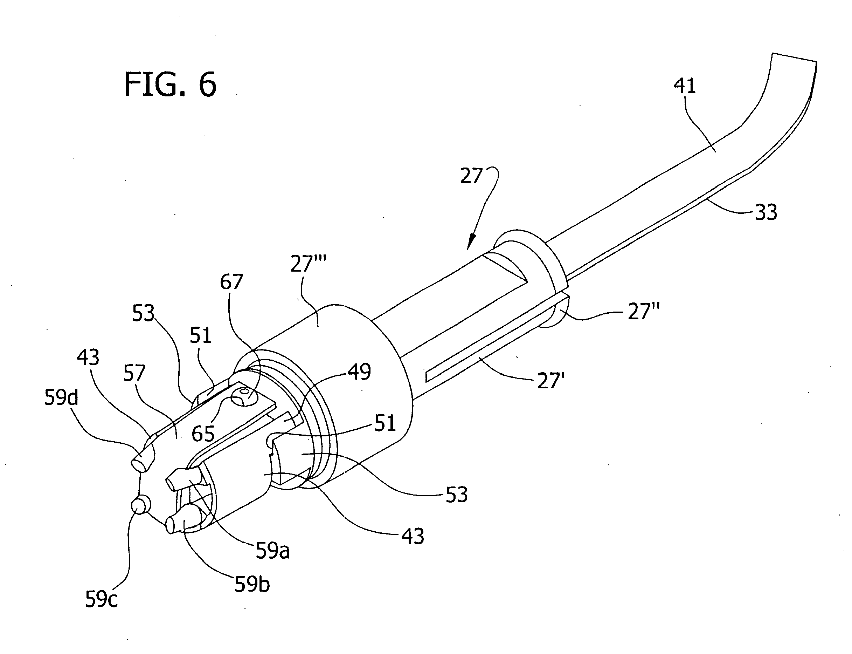

An elongate head 57 of the flex circuit substrate 33 is bent from the position shown in Fig. 5 generally across the top of the forming section 45 between adjacent pairs of posts 59a, 59b, 59c, 59d projecting axially outwardly from the forming section 45 (see, Fig. 6). The head 57 of the flex circuit 31 is formed with a pair of ears 61 defined in part by cutouts 63. The tip thermistor 35 lies between the ears 61. When the head 57 is bent across the top of the forming section 45, the cutouts 63 receive respective ones of the posts 59a-59d. The ears 61 project between respective adjacent pairs of posts 59a, 59b and 59c, 59d. The head 57 extends across the top of the forming section 45 between pairs of posts 59a, 59d and 59b, 59c. The distal end portion of the head 57 extends out from the posts 59a-59d and is bent over on the opposite side of the forming section 45. An aperture 65 in the distal end portion of the head 57 is pushed onto a projection 67 formed as part of the forming section 45 of the probe shaft element 27. A friction fit between the flex circuit substrate 33 at the edge of the aperture 65 and the projection 67 holds the distal end portion of the head 57 in the bent position shown in Fig. 6. It will be appreciated that the various formations on the probe shaft element 27 operate to temporarily hold the flex circuit 31 in position, with the tip thermistor 35, separator thermistor 37 and resistor 39 located substantially in their final positions before any final fixation of these components. Moreover, these formations may operate to finally position the tip thermistor 35, separator thermistor 37 and resistor 39 (i.e., without application of epoxy) within the scope of the present invention.

A suitable adhesive such as an epoxy (not shown) is applied to a portion of the substrate 33 opposite the separator thermistor 37 and to a portion of the substrate opposite the resistor 39. The separator 29 is pushed down onto the probe shaft element 27 and flex circuit 31. The natural resilience of the flex circuit substrate 33 causes the arms 43 of the flex circuit 31 to bow out at the sides so that the separator thermistor 37 and resistor 39 are biased radially outwardly. A neck 34 of the separator 29 engages respective portions of the arms 43 of the substrate 33 opposite the separator thermistor 37 and resistor 39 and pushes them inwardly. The recesses 47 in the forming section 45 allow the flex circuit substrate 33 to deform slightly into the recesses. The spring action of the flex circuit substrate 33 resists this deformation, which results in the substrate portions opposite the separator thermistor 37 and resistor 39 (respectively) being biased against an inner wall 71 of the separator 29. This is desirable because it holds the portions of the arms 43 of the substrate 33 opposite the separator thermistor 37 and resistor 39 against the separator 29 until the epoxy can set, which may not occur until the epoxy is heated in an oven (not shown)after complete assembly of the probe 7. An epoxy may also be used to secure the separator 29 to the probe shaft element 27. Other ways of securing the separator 29 to the probe shaft 19 do not depart from the scope of the present invention.

The subassembly of the flex circuit 31, probe shaft element 27 and separator 29 can be assembled with the tube 26 of the probe shaft 19. The probe tip 25 can then be pushed down onto the separator 29 and flex circuit 31. A central region 79 of the probe tip 25 engages the portion of the head 57 opposite the tip thermistor 35. Attaching the distal end portion of the flex circuit head 57 to the probe shaft element 27 at the projection 67 causes the resilient flex circuit substrate 33 to act as a spring biasing the portion of the head 57 opposite the tip thermistor 35 against the probe tip 25. This allows the tip thermistor 35 to have good contact with the tip 25 (through the substrate 33). The probe 7 can be placed in an oven to cure the epoxy and finally fix the separator thermistor 37 and the resistor 39 in place.

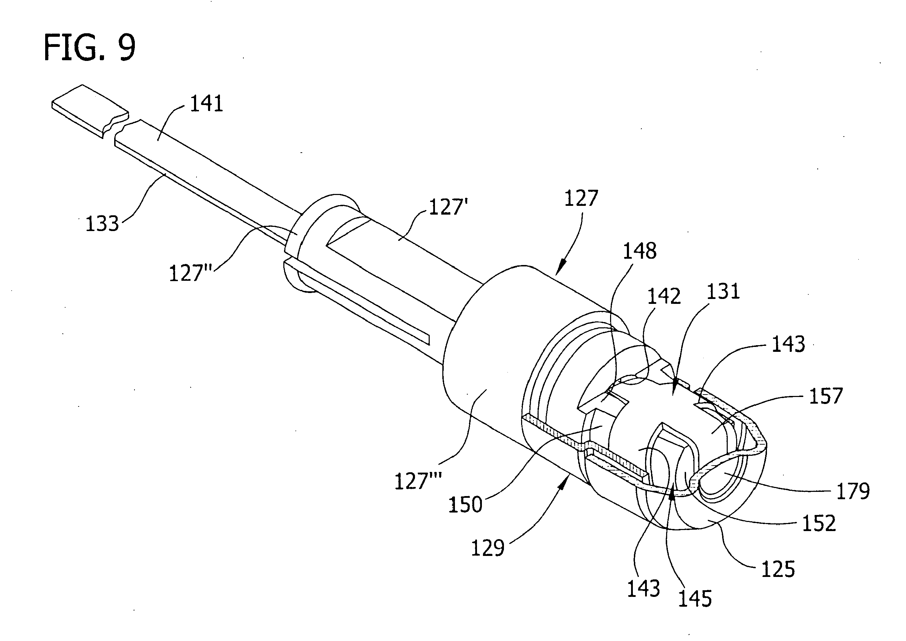

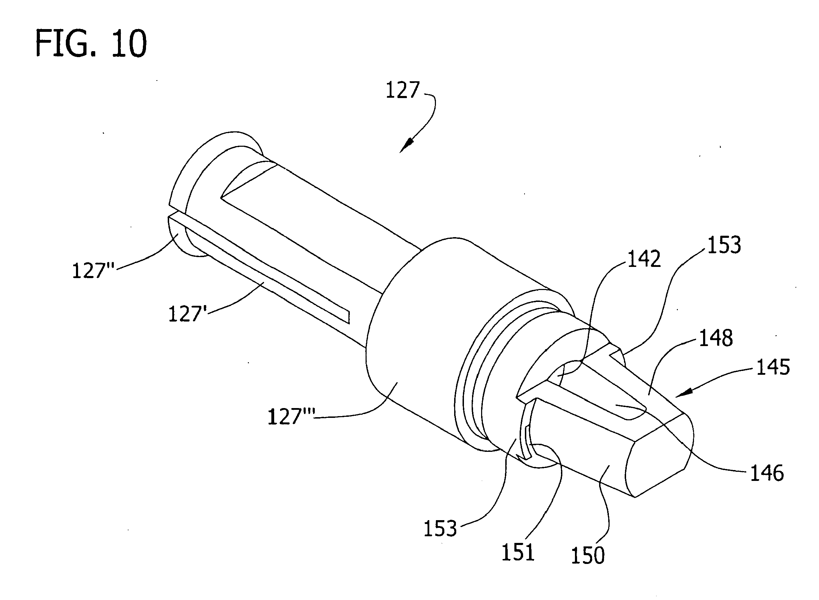

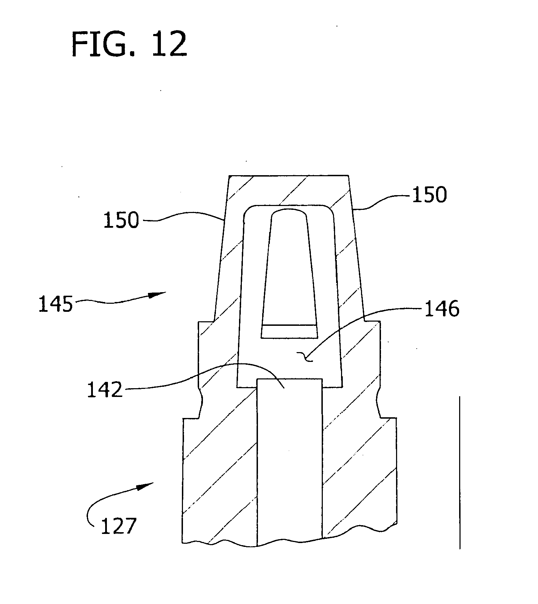

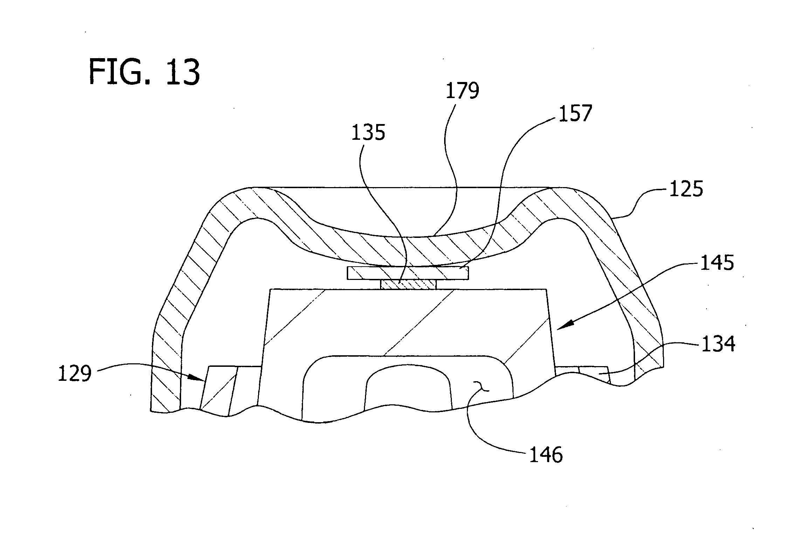

Referring now to Figs. 9-13, a probe tip 125, probe shaft element 127, separator 129, and flex circuit 131 a probe of a second embodiment are shown. Parts of the probe of the second embodiment corresponding to the probe 7 of the first embodiment are given the same reference numeral, plus "100". The components of the probe not illustrated in the drawings can be substantially the same as those parts of the probe 7 of the first embodiment. The probe shaft element 127 includes a cylindrical portion 127''' that engages a tube 126 of the probe shaft 119. A base portion 141 of the flex circuit 131 can be threaded through an opening 142 at the bottom of a forming section 145 of the probe shaft element 127 into a central passage of the probe shaft element. The forming section 145 is generally conical in shape (or more specifically, the frustum of a cone), but is cut on opposite axial planes providing access to the opening 142. The interior of the forming section 145 has a cavity 146 (Fig. 12). One of two flat surfaces 148 of the cone can engage a flex circuit substrate 133 extending out of the central passage of the probe shaft element 127. Arms 143 of the flex circuit 131 can be bent around curved surfaces 150 of the forming section 145 and secured in slots 151 formed in holding members 153 of the probe shaft element 127, substantially in the same way as for the flex circuit 31 of the first embodiment.

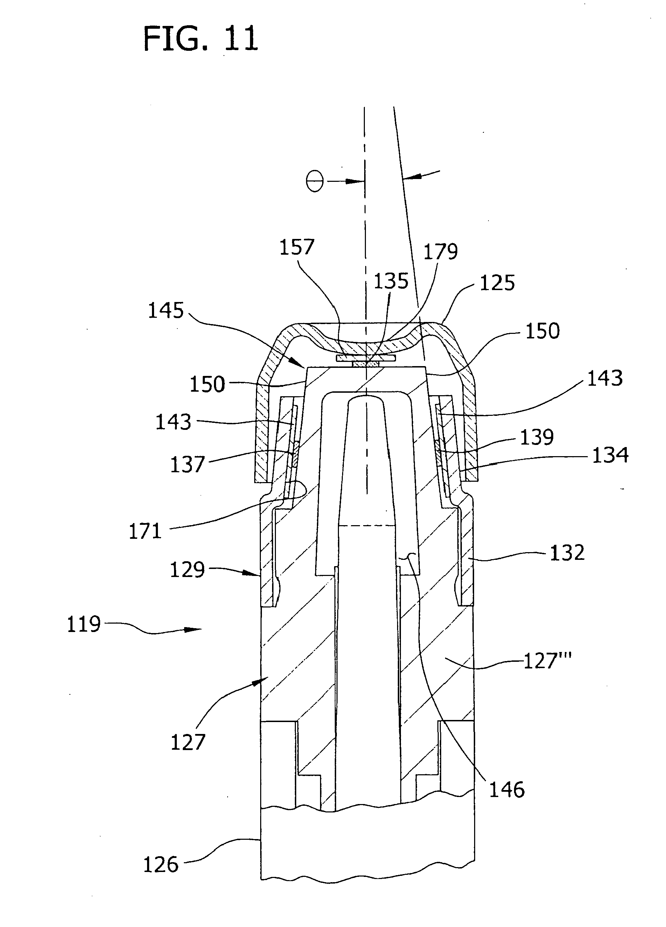

The parts of the arms 143 mounting a separator thermistor 137 and a resistor 139 overlie the curved surfaces 150 of the forming section 145 and generally conform to the (conical) shape of these surfaces (Fig. 11). As a result, the arms 143 and the separator thermistor 137 and resistor 139 on the arms lie at an angle Θ to the axis of the probe shaft element 127. In one embodiment, the angle Θ that the curved surfaces 150 make with the axis is greater than about 5 degrees. In another embodiment, the angle Θ that the curved surfaces 150 make with the axis is less than about 20 degrees and greater than about 5 degrees. The angle Θ at which the separator thermistor 137 and resistor 139 are positioned by the curved surfaces 150 of the forming section 145 facilitates assembly with the separator 129.

Epoxy or other suitable adhesive (not shown) may be applied to the portion of the arm 143 opposite the separator thermistor 137 and to the portion of the arm 143 opposite the resistor 139 prior to assembly with the separator 129. Referring to Fig. 11, when the separator 129 is pushed onto the end of the probe shaft element 127 and flex circuit 131, a larger diameter portion 132 of the separator passes the forming section 145 generally without engaging the flex circuit 131. A neck 134 of the separator 129 having a smaller diameter than the larger diameter portion 132 moves onto the forming section 145. An inner wall 171 of the neck 134 is angled so that it is substantially parallel to the angle of the curved surfaces 150 of the forming section 145. The angle Θ of the curved surfaces 150 and the inner wall 171 reduces the incidence of the separator 129 shearing off the epoxy previously applied to the portions of the arms 143 opposite the separator thermistor 137 and resistor 139 as the separator moves onto the flex circuit 131 and forming section 145. Thus, the epoxy substantially remains on the portions of the arms 143 opposite the separator thermistor 137 and the resistor 139 so that these electrical components can be securely attached to the separator 129 in good thermal contact therewith.

As with the probe shaft 19 of the first embodiment, the probe shaft element 127 received in the distal end of the tube 126 is assembled with the separator 129 and flex circuit 131. The tip 125 is pushed onto a subassembly of the probe shaft element 127, tube 126, separator 129 and flex circuit 131.

The cavity 146 on the interior of the forming section 145 strategically weakens an end surface 152 of the forming section. The tip 125 is sized and shaped so that it pushes the head 157 and the tip thermistor 135 downward, deforming the end surface 152 of the forming section 145 (Fig. 12). The material of the probe shaft element 127 is selected so that this deformation is resiliently resisted. Thus, the end surface 152 acts as a spring for forcing the portion of the head 157 opposite the tip thermistor 135 against a central region 179 of the tip 125, providing good thermal contact. Similarly, the cavity 146 weakens the curved surfaces 150 of the forming section 145. Thus when the separator 129 is applied to the probe shaft element 127 and flex circuit 131, the engagement of the interior wall 171 of the separator in the neck 134 with the portions of the arms 143 opposite the separator thermistor 137 and resistor 139 deforms the curved surfaces 150 radially inward. The deformed curved surfaces 150 act as springs biasing the portions of the arms 143 opposite the separator thermistor 137 and resistor 139 against the interior wall 171 of the neck 134 to further facilitate good contact.

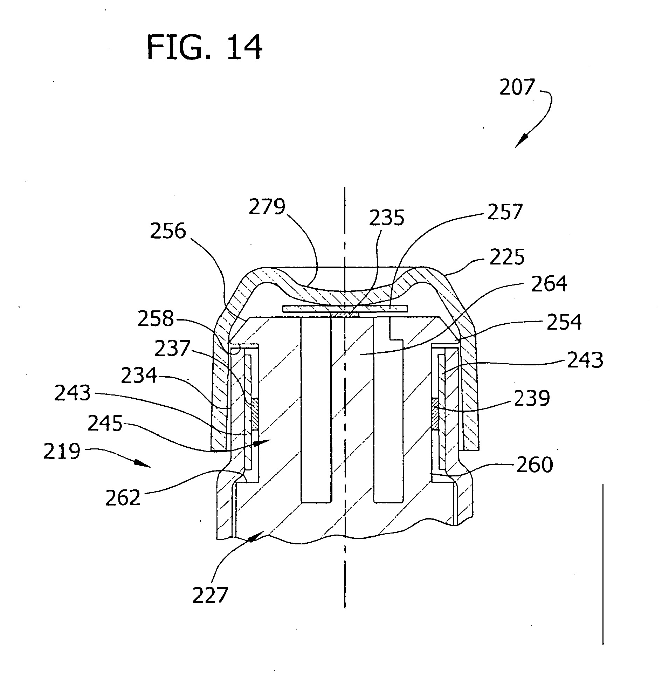

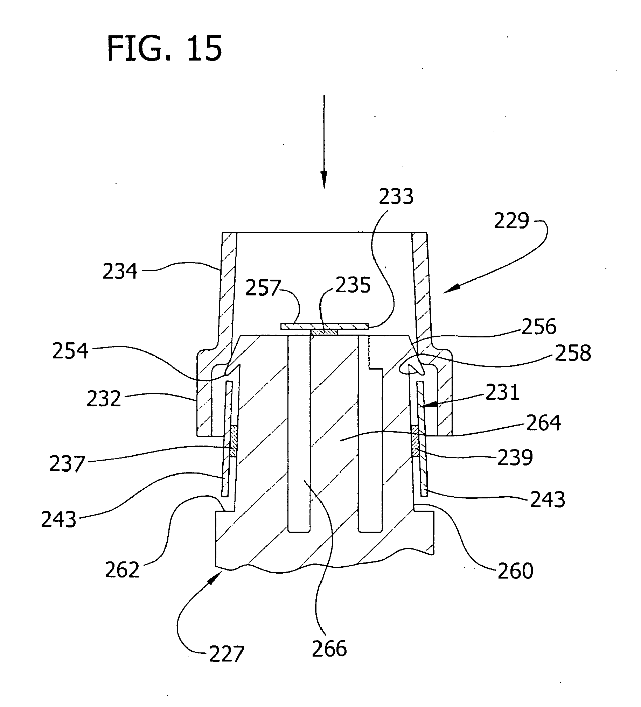

Figures 14 and 15 illustrate a fragmentary portion of a probe 207 of a third embodiment having a probe shaft element 227 formed for secure attachment of a separator 229 to the probe shaft element 227. Parts of the third embodiment of the probe corresponding to those of the second embodiment will be given the same reference numerals as the second embodiment, plus "100". The probe shaft element 227 may be formed as by molding from a resilient material either separately from the remainder of the probe shaft or as one piece with the probe shaft. The probe shaft element 227 is particularly formed to initially secure the separator 229 to the probe shaft without an adhesive.

A distal end portion of a forming section 245 of the probe shaft element has a radially projecting annular flange 254. The flange includes a beveled surface 256 on its axially outward side and a retaining surface 258 on the opposite side extending generally orthogonally to the axis of the probe shaft 219. The forming section 245 has a recess 260 between the retaining surface 258 of the flange 254 and a shoulder 262 formed on the probe shaft element 227. A neck 234 of the separator 229 is retained in the recess 260 between the flange 254 and the shoulder 262 in the assembled probe.

The probe having the modified probe shaft 219 can be assembled in ways that are substantially similar to those previously described herein. A flex circuit 231 can be inserted into the probe shaft 219 through an opening (not shown) in the probe shaft element 227 so that arms 243 of the flex circuit are aligned generally with the recess 260 of the forming section 245. The arms 243 can be bent around the forming section 245. The probe shaft element 227 may include structure for retaining the arms (e.g., like holding members 53, 153 of the first and second embodiments), but such structure is not present in the illustrated embodiment of the probe shaft element. A head 257 of the flex circuit 231 can be bent over the distal end of the forming section 245 to position a tip thermistor 235 substantially as previously described. The forming section 245 includes a support column 264 underlying the location where the tip thermistor 235 is positioned for use in holding the tip thermistor against a tip 225 of the probe. Epoxy can be applied to portions of the arms 243 of the substrate 233 opposite a separator thermistor 237 and resistor 239 (respectively) as described before.

Movement of the separator 229 onto the probe shaft element 227 and flex circuit 231 subassembly begins with a larger diameter portion 232 of the separator 229 receiving the forming section 245 of the probe shaft element. The diameter of the larger diameter portion 232 is such that it does not have significant contact with the forming section 245 or the flex circuit 231 as it passes over the forming section. As illustrated in Fig. 15, when the smaller diameter neck 234 of the separator 229 reaches the flange 254, it engages the beveled surface 256 of the flange. The beveled surface 256 acts as a wedge to facilitate deflection of the flange 254 radially inwardly as the separator 229 continues to be moved axially inwardly relative to the probe shaft element 227. An annular gap 266 between the support column 264 and the outer wall of the forming section facilitates the deflection. This deflection allows the neck 234 to move over and pass the flange 254. When the separator neck 234 reaches the position shown in Fig. 14, the beveled surface 258 of the flange 254 is cleared and the resilience of the probe shaft element material causes the forming section 245 and flange 254 to spring back substantially to their original configurations. The resilience of the flange 254 and forming section 245 places the retaining surface 258 of the flange in axially opposed relation with the distal end of the separator 229. Thus, it will be seen that the neck 234 is captured in the recess 260 between the retaining surface 258 of the flange 254 and the shoulder 262 of the probe shaft element 227 thereby holding the separator 229 in an axial position relative to the probe shaft 219. It will be understood that epoxy (not shown) may be used to affix the separator 229 to the probe shaft element 227 in addition to the mechanical fixation achieved by the flange 254 and shoulder 262. However, the snap connection achieved by the flange 254 and shoulder 262 holds the separator 229 in place prior to the final fixation achieved when the epoxy is cured.

The tip 225 can be placed on the subassembly of the probe shaft element 227, separator 229 and flex circuit 231 substantially as described previously herein. The support column 264 acts as a reaction surface to force the portion of the head 257 opposite the tip thermistor 235 against a central region 279 of the tip 225.

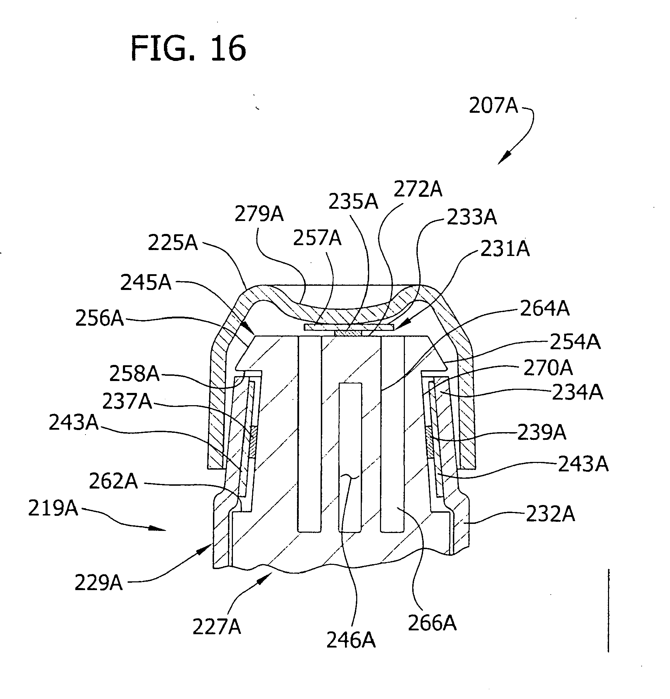

Figure 16 illustrates a probe 207A having a modified probe shaft 219A, which like the probe shaft 219 shown in Figs. 14 and 15 is constructed for snap connection of a separator to the probe shaft. Parts of the modified version of the probe shaft shown in Fig. 16 have the same reference numerals as for the third embodiment shown in Figs. 14 and 15, but with the suffix "A". The probe shaft 219A of Fig. 16 has substantially the same construction as the probe shaft 219 of Figs. 14 and 15. A flange 254A and shoulder 262A formed in a forming section 245A of a probe shaft element 227A mechanically capture and retain a neck 234A of a separator 229A.

An outer wall 270A of the probe shaft element 227A angles inwardly from the shoulder 262A to the flange 254A. The angulation of the outer wall 270A has the same advantage as previously described for the curved surfaces 150 of the forming section 145 of the second embodiment shown in Figs. 9-13. This construction helps to avoid having the separator 229A wipe off the epoxy from portions of the arms 243A opposite a separator thermistor 237A and resistor 239A when the separator is placed on a subassembly of the probe shaft element 227A and flex circuit 231A.

The modified version of Fig. 16 also differs from the embodiment of Figs. 14 and 15 in that a support column 264A is constructed to provide a spring bias to the head 257A of the flex circuit 231A and tip thermistor 235A to press a portion of the head 257A of the substrate 233A opposite the tip thermistor against a central region 279A of a tip 225A of the probe. In that regard, the column 264A has an internal cavity 246A extending up to a support surface 272A of the column. This cavity 246A strategically weakens the support column 264A so that the support surface 272A can be slightly deflected when the tip 225A is applied to the probe shaft element 227A. The deflection is resiliently resisted by the material of the support column 264A, causing it to act as a spring biasing the flex circuit head 257A and tip thermistor 235A mounted thereon upward against the central region 279A of the tip 225A.

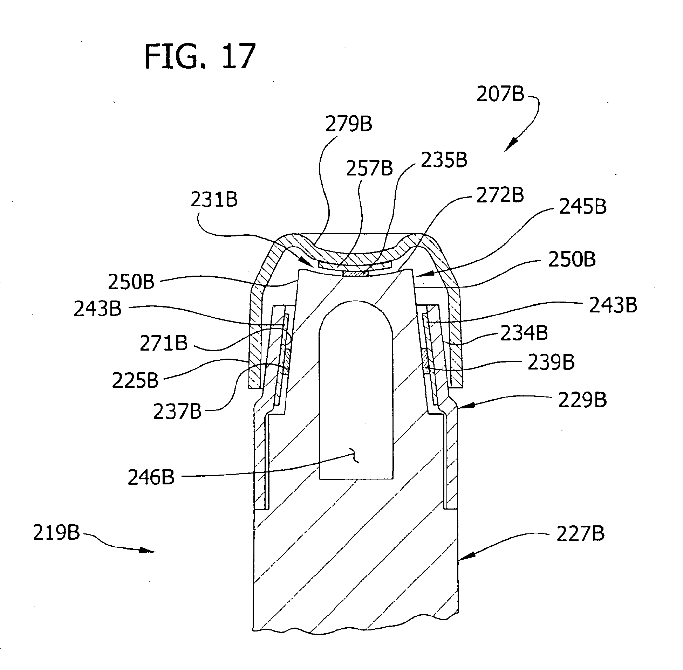

Figure 17 illustrates another modified version of the probe shaft 219B of a probe 207B. Parts of the modified version of the probe of Fig. 17 will be given the same reference numerals as the corresponding parts of the probe illustrated in Figs. 14 and 15, with the addition of the suffix "B". Like the probe shaft element illustrated in Figs. 9-13, a probe shaft element 227B of Fig. 17 includes a generally conically shaped forming section 245B. The angles that the curved surfaces 250B of the forming section 245B and an inner wall 271B of the separator neck 234B have to the axis of the probe shaft 219B provide the same advantage as described above.

The interior of the forming section 245B includes a cavity 246B. An end surface 272B of the forming section 245B is cupped. The end surface 272B underlies a head 257B of the flex circuit 231B and a tip thermistor 235B on the head. The end surface 272B is capable of flexing downward when a tip 225B is applied to the probe shaft element 227B. The deflection causes the forming section 245B to resiliently bias the flex circuit head 257B and the tip thermistor 235B against a central region 279B of the tip 225B.

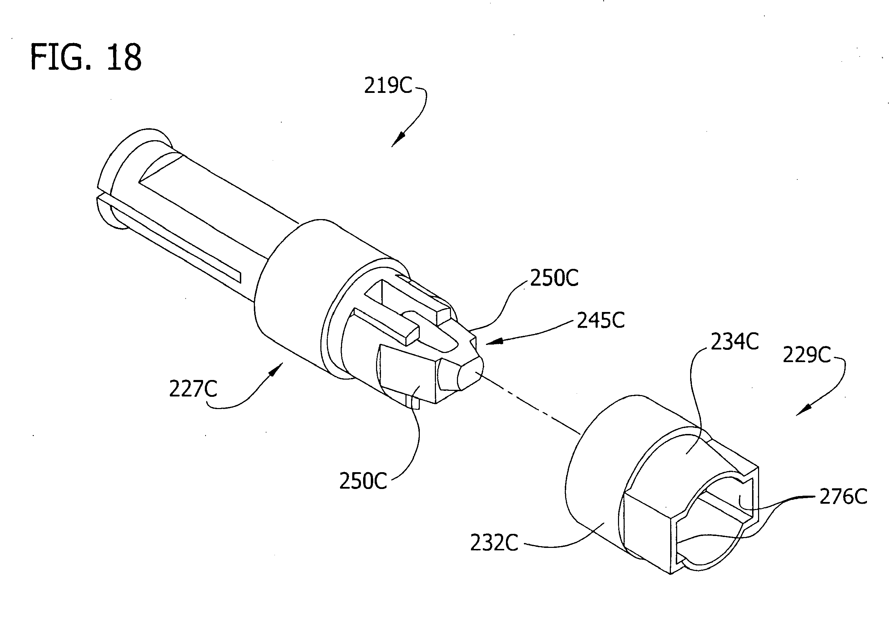

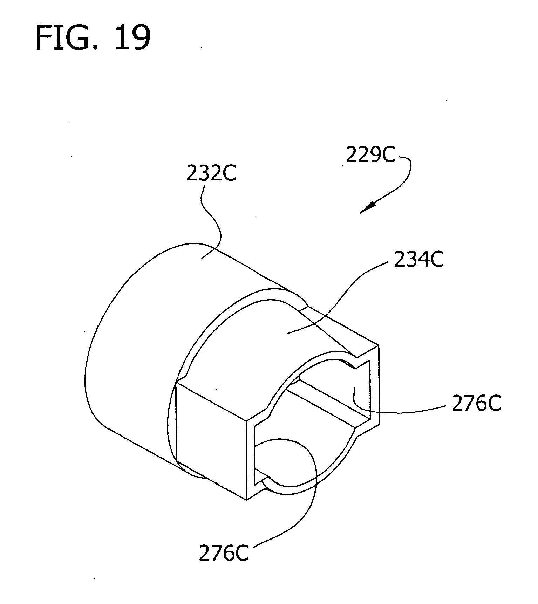

A still further modified version of a probe shaft 219C is shown in Figs. 18 and 19. Parts of the modified version of the probe of Figs. 18 and 19 will be given the same reference numerals as the corresponding parts of the probe illustrated in Figs. 14 and 15, with the addition of the suffix "C". A forming section 245C of a probe shaft element 227C is somewhat similar to the probe shaft element 227B of Fig. 17 except that the side surfaces 250C of the forming section are flat rather than curved. It is at these flat side surfaces 250C that a separator thermistor and resistor are positioned. A separator 229C is formed so that mating flat inner wall segments 276C are present in a neck 234C of the separator. Thus, when the separator 229C is placed on the probe shaft element 227C, the flat side surfaces 250C of the forming section 245C and the flat inner wall segments 276C of the separator neck 234C are in opposed relation. The flat side surfaces 250C and flat inner wall segments 276C sandwich the parts of the flex circuit arms mounting the separator thermistor and resistor (not shown) between them.

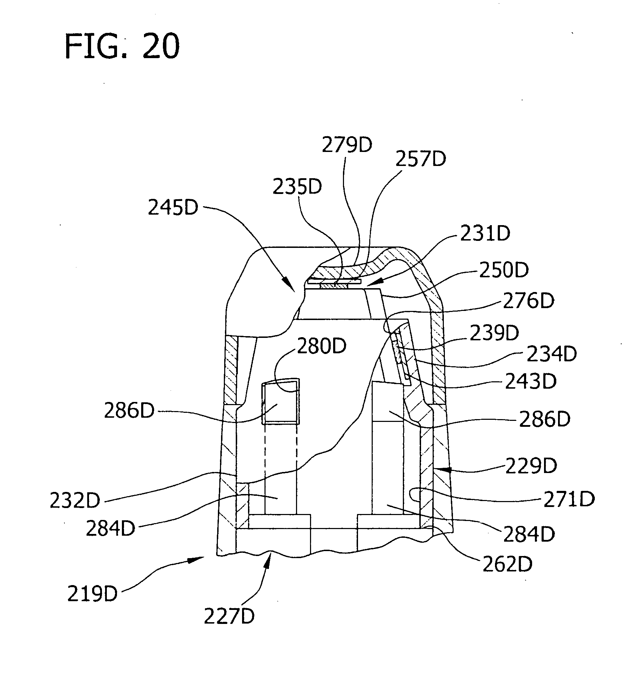

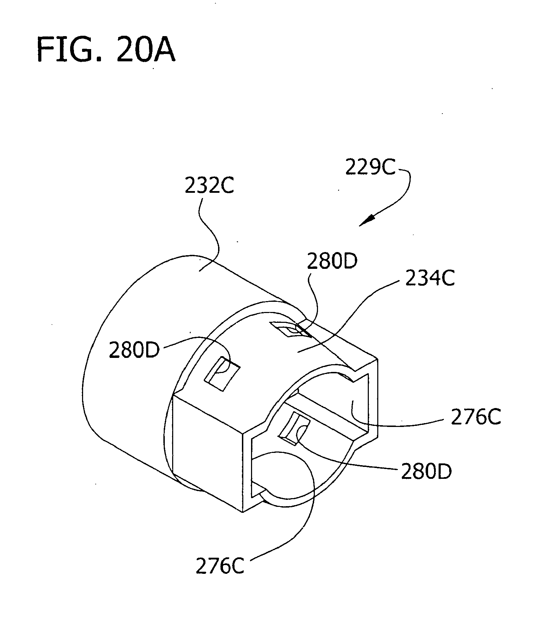

Yet another modified version of the probe shaft 219D is illustrated in Figs. 20 and 20A. Parts of the modified version of the probe of Figs. 20 and 20A will be given the same reference numerals as the corresponding parts of the probe illustrated in Figs. 14 and 15, with the addition of the suffix "D". The probe shaft element 219D of Fig. 20 is similar to the probe shaft element 219C of Figs. 18 and 19 in that a forming section 245D of the probe shaft includes flat side surfaces 250D. A separator 229D has corresponding flat inner wall segments 276D that lie in face to face opposition with the flat side surfaces. A separator thermistor 237D (not shown) and resistor 239D (only a portion of the resistor 239D is illustrated) are sandwiched between respective flat side surfaces 250D and flat inner wall segments 276D, as in the version shown in Figs. 18 and 19. A neck 234D of the separator 229D has a pair of holes 280D on each side generally between the flat inner wall segments.

The probe shaft element 227D is formed with aligning members 284D to engage an inner wall 271D of a larger diameter portion 232D of the separator 229D. These alignment members 284D act to center the separator 229D on the axis of the probe shaft 219D. This provides for a more even and gentle application of force to the portions of the arms 243D opposite the separator thermistor 237D and resistor 239D when they are engaged by the inner wall segments 276D of the neck 234D. The probe shaft element 227D is formed with a shoulder 262D that is positioned for engaging the end of the larger diameter portion 232D of the separator 229D. The shoulder 262D allows the separator 229D to be pushed down onto the probe shaft element 227D so that the angled inner wall segments 276D of the neck 234D engage the portions of the arms 243D opposite the separator thermistor 237D and resistor 239D (respectively) for achieving good thermal contact with the separator. The shoulder 262D also prevents the separator 229D from being pushed too hard against the portions of the arms 243D opposite the separator thermistor 237D and resistor 239D.

The probe shaft element 227D shown in Fig. 20 is also formed for snap-on connection of the separator 229D with the probe shaft element 227D. To that end, the aligning members 284D (only two are shown) are formed with radially outwardly projecting formations 286D. When the separator 229D is pushed axially onto the probe shaft element 227D (as assembled with a flex circuit 231D), the inner wall 271D of the neck 234D engages the projecting formations 286D of the aligning members 284D and deforms them. When the holes 280D on the separator 229D become aligned with respective ones of the projecting formations 286D on the aligning members 284D they snap back to their undeformed configurations. As undeformed, the projecting formations extend through the holes 280D, attaching the separator 229D to the probe shaft element 227D and positioning the separator relative to the probe shaft element. In this way, the forming section 245D captures the separator 229D prior to any fixation with adhesive.

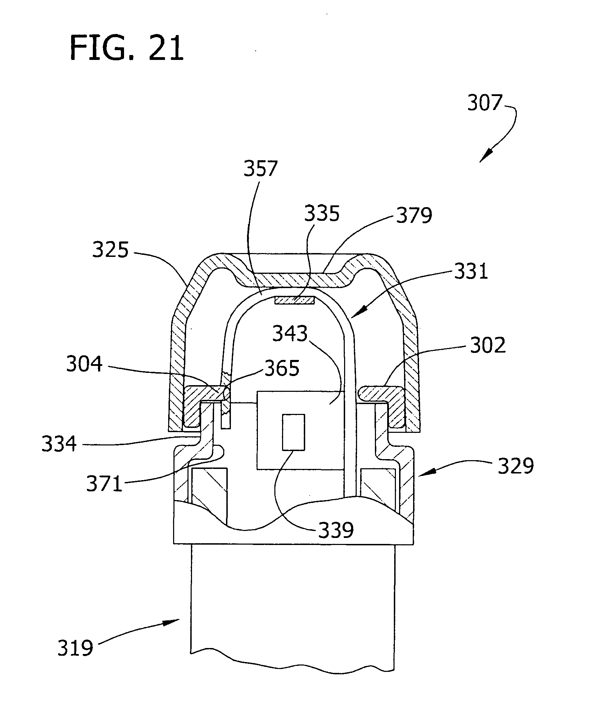

Referring now to Figs. 21-23, a probe 307 of a fourth embodiment is shown to comprise a probe shaft 319 and a separator 329 mounted on the probe shaft. Parts of the probe 307 corresponding to those of the probe 7 of the first embodiment will be given the same reference numerals, plus "300". An annular isolator 302 of a thermally insulating material is mounted on a neck 334 of the separator 329 and is interposed between the separator and a probe tip 325 of the probe 307. The isolator 302 inhibits thermal communication between the separator 329 and the tip 325. It is to be understood that the isolator 302 may not be thermally insulating, and may be broadly considered a "locating member" within the scope of the present invention. The probe shaft 319 does not include a forming section (e.g., 45, 145, 245) as in the prior embodiments, but such structure could be present within the scope of the invention. A flex circuit 331 is deformed so that arms 343 (only one of which is shown) lie against opposite segments of an inner wall 371 of the separator 329. A head 357 of the flex circuit 331 is bent over to position a portion of the head opposite a tip thermistor 335 against a central region 379 of the tip 325. An aperture 365 near the distal end of the head 357 receives a projection 304 formed on the isolator 302 to hold the head in its bent over position. The flex circuit 331 acts as a spring to bias the portion of the head 357 opposite the tip thermistor 335 against the tip 325.

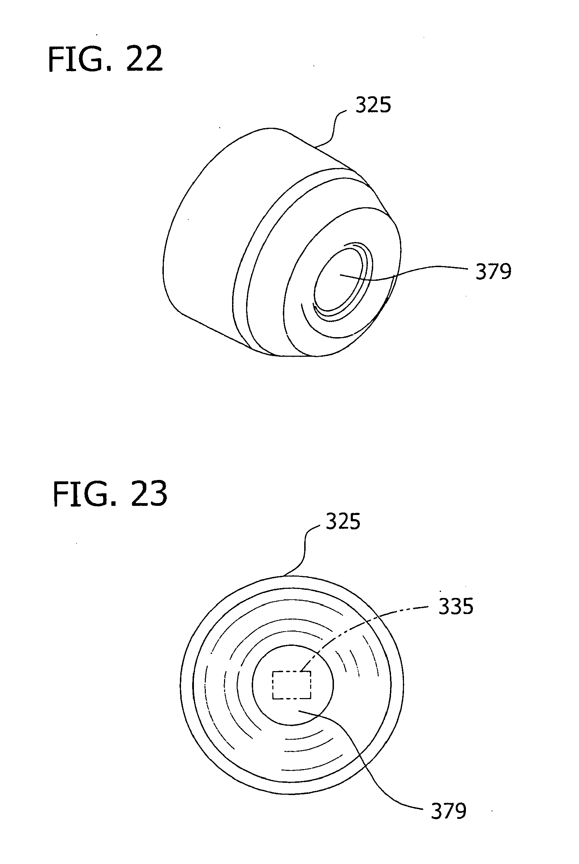

The central region 379 of the tip 325 is shaped to indicate where to position the tip thermistor 335 relative to the tip. More specifically, the central region 379 is formed to lie in a plane that is generally perpendicular to the axis of the probe shaft 319 (see also Figs. 22 and 23). However, a region anywhere on a tip can be shaped in any manner which distinguishes the region from its surrounding to show proper location of an electrical component relative to the tip. The central region 379 thus provides a flat surface (broadly, "a receiving surface") against which the portion of the head 357 opposite the tip thermistor 335 bears. Conventional rounded tips provide for only point contact between the portion of the head of the substrate that is opposite tip thermistor and the tip. Heat transfer occurs more quickly if a greater area of the portion of the head 357 opposite the tip thermistor 335 is engaging the tip 325. It will be understood that a tip (not shown) may have other flat surfaces for receiving additional electrical components within the scope of the present invention.

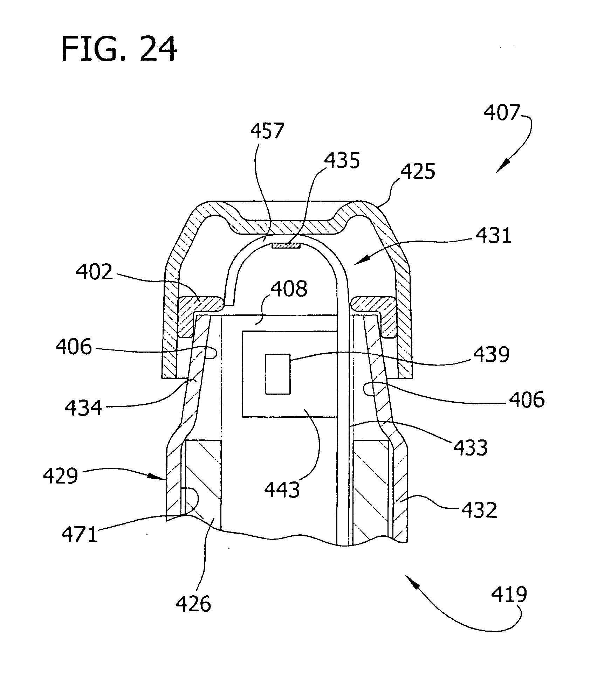

A probe 407 of a fifth embodiment is shown in Figs. 24-26 to comprise a probe shaft 419 and a separator 429 mounted on a distal end of the probe shaft. Parts of the probe 407 corresponding to those of the probe 7 of the first embodiment will be given the same reference numerals, plus "300". An isolator 402 mounted on the distal end of a neck 434 of the separator 429 is interposed between the separator and a probe tip 425 to substantially thermally isolate these two components. As with the probe 307 of the fourth embodiment, the probe shaft 419 of the fifth embodiment does not include a forming section (e.g., 45, 145, 245), although such a structure could be used without departing from the scope of the present invention. The isolator 402 engages a bent over head 457 of a flex circuit 431, but does not positively connect the flex circuit to the isolator. Frictional interaction keeps the head 457 in its bent configuration. However, a projection (e.g., like projection 304 of the fourth embodiment) or other structure could be used to more positively locate the head 457.

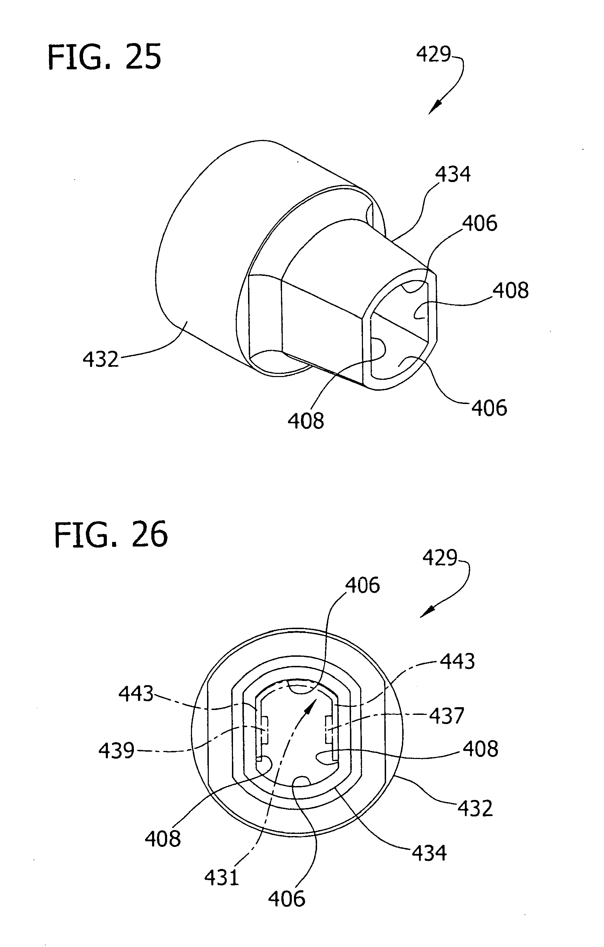

As shown in Figs. 25 and 26, the separator neck 434 tapers toward its distal end (opposite a larger diameter portion 432 of the separator). The neck 434 includes opposed curved side surfaces 406 and opposed flat side surfaces 408. The flat side surfaces 408 are arranged so that when flex circuit arms 443 are bent, portions of the arms opposite a separator thermistor 437 and resistor 439 are adjacent to respective ones of the flat side surfaces 408. The flex circuit arms 443, separator thermistor 437 and resistor 439 are illustrated in phantom in Fig. 26. The flat side surfaces 408 allow for some variance in position of the separator thermistor 437 and/or resistor 439 while still achieving good contact with these components for the best heat transfer between the separator 429 and the components. Moreover, the separator thermistor 437 and resistor 439 are generally mounted on the flex circuit substrate 433 using flat solder pads (not shown, but represented schematically along with the separator thermistor and heating resistor). In the assembled probe 407, the flexible resilience of the flex circuit substrate 433 causes the deformed arms 443 to bear radially outward against the inner wall 471 of the separator 429. Moreover, the arms 443 try to conform to the shape of the inner wall 471. However, because of the flat solder pads, there would tend to be gaps between the portions of the arm opposite the separator thermistor and resistor and circular inner walls of conventional cylindrical separators. The epoxy can fill this gap, but the distance increases the time for heat to transfer through the substrate 433 between the separator thermistor or resistor and the separator. The flat inner wall segments 408 of the separator 429 of Figs. 24-26 allow the portions of the arms 443 of the substrate 433 opposite the solder pad and the separator thermistor 437 or resistor 439 mounted to the solder pad to engage the separator without a substantial gap. Thus, the time for heat to transfer to the thermistor 437 from the separator 429 or from the resistor 439 to the separator is kept to a minimum.

When introducing elements of the present invention or the preferred embodiment(s) thereof, the articles "a", "an", "the" and "said" are intended to mean that there are one or more of the elements. The terms "comprising", "including" and "having" are intended to be inclusive and mean that there may be additional elements other than the listed elements. Moreover, the use of "up", "down", "top" and "bottom" and variations of these terms is made for convenience, but does not require any particular orientation of the components.

As various changes could be made in the above without departing from the scope of the invention, it is intended that all matter contained in the above description and shown in the accompanying drawings shall be interpreted as illustrative and not in a limiting sense.

## Claims

1. An electronic thermometer (1) comprising:
a probe tip (25) adapted to be heated to a temperature by a subject for use in measuring the temperature of the subject;
a deformable circuit element (31) including a deformable electrical conductor (33) and at least one temperature sensor (35) connected to the deformable electrical conductor for detecting the temperature of the probe tip;
a probe shaft (19) including an end portion that is shaped to receive the deformable circuit element (31) in a deformed position and to align the deformable circuit element in a predetermined position.

2. An electronic thermometer as set forth in claim 1 wherein said end portion of the probe shaft has locating structure engaging the deformable circuit element to position the deformable circuit element.

3. An electronic thermometer as set forth in claim 2 wherein said locating structure of the probe shaft comprises four nubs (59a-d) arranged to locate the deformable circuit element.

4. An electronic thermometer as set forth in claim 3 wherein the deformable circuit element (31) has an elongate head (57) and a pair of arms (43) extending laterally outwardly from the elongate head, the elongate head extending between respective pairs of nubs.

5. An electronic thermometer as set forth in claim 1 wherein the deformable electrical element (31) comprises a deformable substrate.

6. An electronic thermometer as set forth in claim 5 wherein one of the deformable substrate and the probe shaft has a projection (67) and the other of the deformable substrate and the probe shaft has an aperture (65) receiving the projection thereby establishing an interference fit holding the deformable circuit element in position relative to the probe shaft.

7. An electronic thermometer as set forth in claim 6 wherein the aperture (65) is in the deformable substrate and the projection (67) is formed integrally as part of the probe shaft.

8. An electronic thermometer as set forth in claim 1 further comprising a base unit (3) and a cord (5) connecting the probe shaft (19) to the base unit.

9. A probe (7) for an electronic thermometer comprising:
a probe tip (25) adapted to be heated to a temperature by an outside subject for use in measuring the temperature of the subject;
a deformable circuit element (31) including a deformable electrical conductor (33) and at least one temperature sensor (35) connected to the deformable electrical conductor for detecting the temperature of the probe tip;
a probe shaft (19) including an end portion that is shaped to receive the deformable circuit element (31) in a deformed position and to align the deformable circuit element in a predetermined position.

10. A method of making a probe for an electronic thermometer comprising:
bringing together a probe shaft (19) and a deformable circuit element (31) into a selected position relative to one another;
bending the deformable circuit element (31) to bring portions of the deformable circuit element into engagement with locating structure (65) formed in the probe shaft;
restraining motion of the bent deformable circuit element with the locating structure to retain a selected relative position of the deformable circuit element and probe shaft.

11. A method as set forth in claim 10 wherein said bending step comprises bending the deformable circuit element so that a portion of the deformable circuit element is received by the locating structure.

12. A method as set forth in claim 11 wherein the locating structure comprises a pair of nubs (59a, 59b) and the deformable circuit element portion is received between the nubs in said bending step.

13. A method as set forth in claim 12 wherein the deformable circuit element has an aperture (67) therein and the locating structure is received in the aperture in said bending step.

14. An electronic thermometer (1) comprising:
a probe tip adapted to be heated to a temperature by a subject for use in measuring the temperature of the subject;
a deformable circuit element including a deformable electrical conductor, at least one temperature sensor connected to the deformable electrical conductor for detecting the temperature of the probe tip and at least one other electrical device connected to the electrical conductor;
a probe shaft (219C) supporting the probe tip and deformable circuit element;
a tubular separator (229C) received on an end of the probe shaft, the separator having a receiving surface (276C) lying generally in a plane and engaging said other electrical device when the separator is received on the end of the probe shaft.

15. An electronic thermometer as set forth in claim 14 wherein said other electrical device is attached by an adhesive to the planar receiving surface (276C) of the separator.

16. An electronic thermometer as set forth in claim 14 wherein the separator has a first portion (234C) including the receiving surface and a second portion (232C), the second portion having a larger transverse dimension than the first portion.

17. An electronic thermometer as set forth in claim 14 wherein said other electrical device comprises a first electrical device, the deformable circuit element further including a second electrical device, and wherein the receiving surface comprises a first receiving surface (276C), the separator further comprising a second receiving surface (276C) lying generally in a plane, the second electrical device engaging the second receiving surface.

18. An electronic thermometer as set forth in claim 14 wherein the probe shaft (219C) is formed with a generally planar receiving surface (250C) arranged generally in opposition to the receiving surface of the separator, said other electrical device being sandwiched between the generally planar receiving surface of the probe shaft and the separator.

19. An electronic thermometer as set forth in claim 18 wherein the probe shaft (219C) has a longitudinal axis, the receiving surfaces (276C, 250C) of the separator and probe shaft lying generally at an angle to the longitudinal axis.

20. An electronic thermometer as set forth in claim 19 wherein the receiving surfaces (276C, 250C) of the separator and probe shaft are closer to the longitudinal axis adjacent a distal end of the probe shaft.

21. An electronic thermometer as set forth in claim 19 wherein the separator (229C) has a transverse dimension that is larger at one end of the separator than the other end of the separator.

22. An electronic thermometer as set forth in claim 14 wherein the probe shaft (219C) includes a shoulder engaging an end of the separator for locating the separator with respect to the probe shaft.

23. An electronic thermometer as set forth in claim 14 further comprising a base unit and a cord connecting the probe shaft to the base unit.

24. A probe for an electronic thermometer comprising:
a probe tip adapted to be heated to a temperature by a subject for use in measuring the temperature of the subject;
a deformable circuit element including a deformable electrical conductor, at least one temperature sensor connected to the deformable electrical conductor for detecting the temperature of the probe tip and at least one other electrical device;
a probe shaft (219C) supporting the probe tip and deformable circuit element;
a tubular separator (229C) received on an end of the probe shaft, the separator having a receiving surface (276C) lying generally in a plane and engaging said other electrical device when the separator is received on the end of the probe shaft.

25. An electronic thermometer (1) comprising:
a probe tip (125) adapted to be heated to a temperature by a subject for use in measuring the temperature of the subject;
a deformable circuit element (131) including a deformable electrical conductor (133), at least one temperature sensor (135) connected to the deformable electrical conductor for detecting the temperature of the probe tip and at least one other electrical device (137) connected to the electrical conductor;
a probe shaft (119) supporting the probe tip and deformable circuit element;
a tubular separator (129) received on an end of the probe shaft, the separator having a frusto-conical inner receiving surface (171) engaging said other electrical device (137) when the separator is received on the end of the probe shaft.

26. An electronic thermometer as set forth in claim 25 wherein said other electrical device is attached by an adhesive to the receiving surface (171) of the separator.

27. An electronic thermometer as set forth in claim 25 wherein the separator has a first portion (134) including the receiving surface and a second portion (132), the second portion having a larger transverse dimension than the first portion.

28. An electronic thermometer as set forth in claim 25 wherein said other electrical device comprises a first electrical device (137), the deformable circuit element further including a second electrical device (139), and wherein the receiving surface engages the second electrical device.

29. An electronic thermometer as set forth in claim 25 wherein the probe shaft is formed with a generally frusto-conical receiving surface (150) arranged generally in opposition to the receiving surface (171) of the separator, said other electrical device being sandwiched between the receiving surfaces of the probe shaft and the separator.

30. An electronic thermometer as set forth in claim 29 wherein the probe shaft has a longitudinal axis, the receiving surfaces of the separator and probe shaft lying generally at an angle to the longitudinal axis.

31. An electronic thermometer as set forth in claim 30 wherein the receiving surfaces of the separator and probe shaft are closer to the longitudinal axis adjacent a distal end of the probe shaft.

32. An electronic thermometer as set forth in claim 30 wherein the separator has a transverse dimension that is larger at one end of the separator than the other end of the separator.

33. An electronic thermometer as set forth in claim 25 wherein the probe shaft includes a shoulder engaging an end of the separator for locating the separator with respect to the probe shaft.

34. An electronic thermometer as set forth in claim 25 further comprising a base unit and a cord connecting the probe shaft to the base unit.

35. A probe for an electronic thermometer comprising:
a probe tip (125) adapted to be heated to a temperature by a subject for use in measuring the temperature of the subject;
a deformable circuit element (131) including a deformable electrical conductor (133), at least one temperature sensor (135) connected to the deformable electrical conductor for detecting the temperature of the probe tip and at least one other electrical device (137);
a probe shaft (119) supporting the probe tip and deformable circuit element;
a tubular separator (129) received on an end of the probe shaft, the separator having a generally frusto-conical inner receiving surface engaging said other electrical device when the separator is received on the end of the probe shaft.

36. A method of making a probe for an electronic thermometer comprising:
positioning an electrical device generally at a flat surface formed in an end of the probe shaft;
applying an adhesive to the electrical device;
moving a separator onto the end of the probe shaft so that a generally flat surface on the separator engages the adhesive applied to the electrical device and the electrical device is positioned between the generally flat surfaces of the probe shaft and the separator.

37. An electronic thermometer (1) comprising:
a probe shaft (219);
a probe tip (225) supported by the probe shaft and adapted to be heated to the temperature by a subject for use in measuring the temperature of the subject;
a deformable circuit element (233) supported by the probe shaft, the circuit element including a deformable electrical conductor and at least one electrical device (235);
a generally tubular separator (234) on the probe shaft having first and second opposite ends;
wherein the probe shaft is formed with a shoulder (262) generally at a distal end of the probe shaft, the first end of the separator engaging the shoulder and thereby being located relative to the probe shaft and probe tip.

38. An electronic thermometer (1) comprising:
a probe tip (125) adapted to be heated to a temperature by a subject for use in measuring the temperature of the subject;
a deformable circuit element (131) including a deformable electrical conductor, at least one temperature sensor (135) connected to the deformable electrical conductor for detecting the temperature of the probe tip and at least one other electrical device (137);
a probe shaft (119) having a longitudinal axis and supporting the probe tip and deformable circuit element, the probe shaft having a receiving surface engaging said other electrical device;
a tubular separator (129) received on an end of the probe shaft, the separator having a receiving surface and engaging said other electrical device when the separator is received on the end of the probe shaft;
the receiving surfaces of the probe shaft and tubular separator defining acute angles relative to the longitudinal axis greater than about 5 degrees.

39. An electronic thermometer (1) comprising:
a probe tip (225) adapted to be heated to a temperature by a subject for use in measuring the temperature of the subject;
a deformable circuit element (233) including a deformable electrical conductor, at least one temperature sensor (235) connected to the deformable electrical conductor for detecting the temperature of the probe tip and at least one other electrical device;
a probe shaft (219) having a longitudinal axis and supporting the probe tip and deformable circuit element, the probe shaft having a receiving surface engaging said other electrical device;
a tubular separator (234) received on an end of the probe shaft, the separator having a receiving surface and engaging said other electrical device when the separator is received on the end of the probe shaft;
the tubular separator (234) and probe shaft (219) being constructed for snap on connection.

40. An electronic thermometer as set forth in claim 39 wherein the probe shaft includes a wedge shaped projection (254) having a locking surface positioned for engaging the separator to inhibit movement of the separator off of the probe shaft.

41. An electronic thermometer (1) comprising:
a probe shaft (319);
an electronic temperature sensor (335) supported by the shaft;
a probe tip (325) supported by the shaft at a distal end thereof, the probe tip including a receiving surface (379) in thermal contact with the sensor, the probe tip being adapted to be heated by a subject for detection by the sensor to measure the temperature of the subject, the probe tip receiving surface being shaped to indicate the position of the temperature sensor relative to the tip

42. An electronic thermometer as set forth in claim 41 wherein the receiving surface is generally flat.

43. An electronic thermometer as set forth in claim 42 wherein the probe tip comprises an outer annular portion and a central portion, the central portion including the generally flat receiving surface.

44. An electronic thermometer as set forth in claim 43 wherein the central portion of the probe tip is recessed from the adjacent annular portion.

45. An electronic thermometer as set forth in claim 42 wherein the central portion is recessed relative to the outer portion.

46. An electronic thermometer as set forth in claim 44 wherein the central portion includes an outer surface generally opposite the receiving surface, the outer surface being generally flat.

47. An electronic thermometer (1) comprising:
a probe tip (25) adapted to be heated to a temperature by a subject for use in measuring the temperature of the subject;
a circuit element (31) supported by the probe shaft, the circuit element including an electrical conductor (33) and at least one electrical temperature sensor (35) in thermal contact with the probe tip;
a probe shaft (19) supporting the probe tip and circuit element, the probe shaft being constructed for biasing the temperature sensor in a direction toward the probe tip.

48. An electronic thermometer as set forth in claim 47 wherein the probe shaft is made of a resilient material.

49. An electronic thermometer as set forth in claim 48 wherein the probe shaft includes a platform (145) operatively engaging the temperature sensor, and a cavity (146) generally behind the platform permitting flexion of the platform to bias the temperature sensor toward the probe tip.
